# EUROPEAN PATENT APPLICATION

(11) **EP 3 422 674 A1**
(43) Date of publication of application: **02.01.2019**
(21) Application number: 17177791.5
(22) Date of filing: 26.06.2017
(51) Int. Cl.: H04L 29/12, H04L 29/08

(54) **A METHOD OF RESOLVING A DOMAIN NAME BY A DNS SERVER TO A PLURALITY OF IP ADDRESSES BASED ON LOCATION INFORMATION OF THE USER EQUIPMENT**

(71) Applicant: Koninklijke KPN N.V., 3072 AP Rotterdam (NL)
(72) Inventor: van Steenbergen, Mr. Ate, 9737 NN Groningen (NL)
(74) Representative: Wuyts, Koenraad Maria

(57) **Abstract**

A method of resolving a domain name by a DNS server, wherein said domain name resolves to a plurality of corresponding IP addresses, said method comprises the steps of selecting, by the DNS server, one or more of a plurality of IP addresses based on comparisons of user geolocation information of a corresponding UE with each of a plurality of server geolocation information of each of the server, wherein the geolocation information provides for a physical location of the UE and the server, respectively.

## Description

### Technical field

The present invention is generally related to a Domain Name System (DNS) and, more specifically, to a method of resolving a domain name to a plurality of IP addresses based on geolocation information of the corresponding servers as well as based on the geolocation of the user querying the DNS.

### Background

The Domain Name System (DNS) is a concept which defines in which way the internet domain names are translated into IP addresses. A DNS server maps the domain name that people use to locate a website, e.g. http://ww.kpn.com, to an IP address that a user equipment (UE) can use to locate that particular website. Browsing the World Wide Web, i.e. the internet, is one of many applications that rely on a proper functioning of the DNS concept.

Nowadays, the DNS is a hierarchical decentralized naming system for all kinds of electronic devices connected to the internet like mobile phones, computers, tablets, smart watches, etc. The DNS is provided as a worldwide, distributed directory service, which is, in the present world wide web, a required component for the adequate functionality of the internet.

In the development of wireless mobile telecommunications technology, a lot of emphasis is put on the throughput capabilities of the network. It is envisaged that new generations of wireless mobile telecommunication technology, like for example 5G, support data rates of tens of megabits per second per user. This will enable users to, for example, stream high content video to their mobile phone.

One of the problems of these developments may be related to the latency aspects. For certain applications it is not necessarily the bandwidth restrictions that may play a dominant role, but latency restrictions. Latency issues may especially play a role for mobile user equipment like smart phones, communication equipment in self-driving cars, real-time biometric applications and data sensors. In other words, applications on a user equipment may desire low latency communications. Low latency communications accomplish that the applications, running on the user equipment, are able to take swift, and timely, actions based on communications received from a content server.

### Summary

It is an objective to provide for methods of resolving a domain name by a Domain Name System (DNS) server, wherein said resolving takes into account location information of a user equipment.

It is another objective to provide for a User Equipment (UE) for querying a DNS server for resolving a domain name to one or more Internet Protocol (IP) addresses.

It is a further objective to provide for a DNS server arranged for resolving a domain name to a plurality of IP addresses based on location information of a user equipment.

In a first aspect, there is provided a method of resolving a domain name by a DNS server, wherein said domain name resolves to a plurality of corresponding IP addresses.

The method comprises the steps of:
- receiving, from a UE by said DNS server, a DNS query for resolving a domain name, wherein said query comprises said domain name to be resolved and comprises user geolocation information of said UE wherein said user geolocation information provides for an indication of a geographical location of said UE;
- resolving, by said DNS server, said received domain name to a plurality of IP addresses, wherein said resolving comprises the steps of:
   - obtaining, by said DNS server, said plurality of IP addresses corresponding to said received domain name, wherein each of said plurality of IP addresses is associated with server geolocation information of a corresponding server, wherein each of said server geolocation information provides for an indication of a geographical location of said corresponding server,
   - selecting one or more of said plurality of IP addresses based on comparisons of said user geolocation information with each of said server geolocation information;
- transmitting, by said DNS server, a DNS response comprising said selected one or more of said plurality of IP addresses.

According to the presented method, one or more of the plurality of IP addresses are selected based on comparisons of the user geolocation information with each of the server geolocation information. The basic insight here is that it is likely that servers that are physically located the closest to the physical location of the UE may provide for the fastest response times. That is, it is likely that the response time delays are lowest for those servers that are in the vicinity of the UE itself.

The DNS server has to its disposal the user geolocation information, i.e. information which provides for an indication of a geographical location of the UE, as well as the server geolocation information, i.e. information which provides for indications of geographical locations of the servers. The geolocation information may be provided in different kinds of forms and shapes. Typically, the user geolocation information and the server geolocation information are provided in a same format, i.e. a same dimension / domain, such that the DNS server is able to effectively compare the user geolocation information with any of the server geolocation information.

It is noted that, in accordance with the present disclosure, the received domain name may resolve to a plurality of IP addresses, wherein the servers corresponding to those IP addresses may host the same or identical services. As such, a user may be served by any of these servers. The selection of which server may be used for a particular user is based on the concept that a server closest to the user is, most likely, the server with the least latency.

A UE may be, in accordance with the present disclosure, a smart phone, a tablet, a smart watch, laptop, an embedded system inside a vehicle like a car communication system, or anything alike.

It is further noted that the user geolocation information may be generated by the UE itself, but it may also be generated by a different device like a sensor. For example, the UE may comprise a Global Positioning System, GPS, unit for determining its physical location. Typically, the user geolocation information may be provided using latitude and longitude coordinates. Latitude is a geographic coordinate that specifies the north-south position of a point on the Earth's surface and longitude is a geographic coordinate that specifies the east-west position of a point on the Earth's surface.

The comparisons of the user geolocation information with each of the server geolocation information may encompass a plurality of results. For example, a comparison of a user geolocation information with a single server geolocation information could result in a measure for a geographic distance between the UE and the particular server. For example, the result could be that the UE and the particular server are spaced apart for certain kilometres or miles. Another option could be that the comparison results in an "accept" or a "decline" option. In case the physical distance between the UE and the corresponding server is below a predefined distance threshold, the result may be an "accept". In case the physical distance between the UE and the corresponding server is above said predefined distance threshold, the result may be a "decline". In this particular situation, only the IP addresses corresponding to the "accept" result may be selected and transmitted back to the UE in the DNS response.

Latency is typically perceived by the application running on the user equipment. The latency may be considered as the waiting time from the moment in time of sending a request message to the moment in time of receiving a response. The latency, i.e. delay or response time, is typically the sum of a network based latency and a processing time based latency.

Network based latency is the latency caused by the network. It is related to the time it takes by the network to route the messages. It may be caused by the hops in a network as well as the distance between the user equipment and the corresponding server.

Processing time based latency is the latency caused by the processing of the request message at the corresponding server. Additionally, a waiting time as a result of a queue at the server side may be included.

In an embodiment, said step of receiving said DNS query comprises:
- receiving, from said UE by said DNS server, successive DNS queries for resolving said same domain name, wherein each of said successive received DNS queries comprise updated user geolocation information.

The inventor has found that, typically, the UE could be moving around. That is, the UE could reside in a car, train, bus, or anything alike, and may thus move from one location to another location. In such a situation, it is possible, or even likely, that the fastest server for that particular UE may change over time. The fastest server, i.e. the server having the lowest response time delay, could change during the whole trip of the UE. As such, the inventor has found that it may be beneficial to periodically sent out, by the UE, successive DNS queries for determining whether a different server should be used by the UE based on the updated user geolocation information. As such, the DNS server will receive, from the same UE, successive DNS queries for resolving the same domain name.

The above may be strengthened by the UE itself. The UE may cache all kinds of received DNS responses locally. More particularly, the UE may store domain names and their corresponding IP addresses locally for particular predefined time periods. Once the time period for a particular domain name has expired, the UE may sent out a new DNS query for that particular domain name to renew the IP addresses for that particular domain name.

The inventor has found that, in the above described scenario, it may also be beneficial if the UE takes into account a predefined geolocation parameter. The predefined geolocation parameter is related to a particular geographic distance that the UE is allowed to move without updating the domain names and their corresponding IP addresses that have been stored locally. Thus, once the UE has moved more than the particular predefined geolocation parameter for a domain name, the UE may sent out a new DNS query for that particular domain name to renew the IP addresses for that particular domain name. The basic aspect behind this reasoning is that a particular server is the fastest server for a UE as long as the UE does not substantially move around. Once the UE has moved more than a particular predefined threshold, being the geolocation parameter, it may be the case that that particular server is no longer the fastest server available. As such, a new DNS query could be sent by the UE to update the IP addresses for that particular domain name.

As an alternative, the UE may store the IP addresses, as well as the server geolocation information corresponding to a particular domain name. The UE may then be able to determine which IP address to use based on its own geolocation information, i.e. based on the user geolocation information.

In a further embodiment, the comparisons reflect physical distances between said UE and said one or more of said plurality of servers.

A physical distance may be expressed in the form of a distance as the crow flies, i.e. the shortest path between the UE and a corresponding server.

In another embodiment, the step of selecting comprises:
- ranking said one or more of said plurality of servers based on said physical distances between said UE and said one or more of said plurality of servers.

The inventor has found that it may be beneficial in case the UE is provided with a plurality of IP addresses to select from. Typically, the UE will send the IP address that is on top of the list, i.e. the "first" IP address. In case the first IP address malfunctions for whatever reason, the UE typically decides to go for the "second" IP address in the list, etc.

In case the plurality of servers are ranked based on the physical distances between the UE and the plurality of servers, the probability that a server is selected, by the UE, with a relatively low response time delay is increased. Even if the first IP address is not reachable, for example in case the corresponding server is down, it is likely that the second IP address in the list will still provide for a relatively low response time delay for the UE.

In an embodiment, the user geolocation information and/or said server geolocation information comprise any of:
- Global Positioning System, GPS, coordinates of said UE and/or said servers;
- Cell identification of an access node in a telecommunication network serving said UE;
- Assisted GPS.

The expressions, i.e. the wording, of the different aspects comprised by the method according to the present disclosure should not be taken literally. The wording of the aspects is merely chosen to accurately express the rationale behind the actual functioning of the aspects.

In accordance with the present disclosure, different aspects applicable to the above mentioned examples of the methods in a first aspect of the disclosure, including the advantages thereof, correspond to the aspects which are applicable to methods of the second aspect of the disclosure.

In a second aspect of the disclosure, there is provided a method of querying a DNS Server, for resolving a domain name to one or more IP addresses, by a UE said method comprising the steps of:
- transmitting, by said UE, to said DNS server, a DNS query, for resolving a domain name, wherein said query comprises said domain name to be resolved and comprises user geolocation information of said UE, wherein said user geolocation information provides for an indication of a geographical location of said UE;
- receiving, by said UE, from said DNS server, a DNS response comprising one or more of IP addresses corresponding to said domain name;
- selecting, by said UE, one of said one or more IP addresses in said DNS response.

The received DNS response may comprise a plurality of IP addresses as well as their corresponding server geolocation information. The server geolocation information may be beneficial for the UE as this information may be used, by the UE, for selecting an IP address.

The inventor has found that it may be beneficial if the UE transmits a DNS query to the DNS server, wherein the DNS query comprise the domain name to be resolved as well as user geolocation information of the UE. The user geolocation information enables the DNS server to select one or more IP addresses corresponding to servers that are in the vicinity of the UE.

The above described method thus enables the DNS server to select IP addresses of which it is likely that they form the fastest servers for the particular UE. That is, those servers may have the lowest response time delay for the UE.

In an embodiment, each of said plurality of IP addresses is associated with server geolocation information of a corresponding server, wherein each of said server geolocation information provides for an indication of a geographical location of said corresponding server, said DNS response comprising said server geolocation information, and wherein said step of selecting comprises:
- determining, by said UE, which of said one or more servers is physically closest to said UE based on comparisons of said user geolocation information with each of said server geolocation information;
- selecting, by said UE, said IP address of said server which is physically closest to said UE.

In a further embodiment, the DNS response comprises a plurality of IP addresses corresponding to said domain name, wherein step of selecting one of said plurality of IP addresses in said DNS response comprises:
- querying, by said UE, each of said servers corresponding to said plurality of IP addresses in said DNS response for determining response time delays of each of said servers, wherein a response time delay is defined as a time between querying a server and receiving a query response from that server;
- receiving, by said UE, query responses thereby establishing said response time delays of each of said servers;
- determining, by said UE, which of said plurality of servers has lowest response time delay;
- selecting, by said UE, said IP address of said server having said lowest response time delay.

The inventor has found that it is likely that the IP addresses received by the UE in the DNS response have the lowest response time delay for the UE. This is, however, not necessarily the case. As such, the UE may query each of the servers corresponding to these IP addresses to actually determine the response time delays for each of these servers. Once all the response time delays have been determined, the UE may select one or more of the IP addresses of the servers that have the lowest response time delay.

As mentioned before, it is likely that the server that is physically closest to the UE is the server with the lowest response time delay for that UE. As such, it is likely that the step of selecting, by the UE, the IP address of the server having the lowest response time delay is actually the server that is physically the closest to the UE. However, this is not, as explained above, always the case.

In an embodiment, said method comprises the steps of:
- executing, by said UE, an application, wherein said application comprises a plurality of sub-applications, wherein each sub-application is associated with its own Transmission Control Protocol/Internet Protocol, TCP/IP, protocol stack,
- querying, using each of said TCP/IP protocol stacks, a unique server corresponding to said plurality of IP addresses in said DNS response for determining said response time delays.

In a further embodiment, said step of querying comprises:
- querying, using each of said TCP/IP protocol stacks, a unique server corresponding to said plurality of IP addresses in said DNS response for determining said response time delays at substantially the same time.

The inventor has found that, in order to compare the response time delays of each of the servers, it may be beneficial if all of these servers are queried at substantially the same time. The DNS queries are thus transmitted, by the UE, in parallel. This mitigates any risk to potential interference that may affect only one DNS query. As such, it is more likely that each of the DNS queries encounter the same type, and the same amount, of interference which results in a more fair comparison of the response time delays of each of the servers.

In a third aspect, there is provided a DNS server arranged for resolving a domain name to a plurality of IP addresses.

The DNS server comprising:
- a receiver arranged for receiving, from a UE over a network, a DNS query for resolving a domain name, wherein said query comprises said domain name to be resolved and comprises user geolocation information of said UE wherein said user geolocation information provides for an indication of a geographical location of said UE;
- resolve equipment arranged for resolving said received domain name to a plurality of IP addresses, by:
   - obtaining said plurality of IP addresses corresponding to said received domain name, wherein each of said plurality of IP addresses is associated with server geolocation information of a corresponding server, wherein each of said server geolocation information provides for an indication of a geographical location of said corresponding server,
   - selecting one or more of said plurality of IP addresses based on comparisons of said user geolocation information with each of said server geolocation information;
- a transmitter arranged for transmitting, over a network, a DNS response comprising said selected one or more of said plurality of IP addresses.

It is noted that, in practice, the transmitter and the received may be embodied as a transceiver, i.e. a device which is capable of transmitting and receiving packets. In general, this is the network interface card, NIC, of a server or device, or a virtual NIC in a virtual machine.

In an embodiment, the comparisons reflect physical distances between said UE and said one or more of said plurality of servers, wherein said resolve equipment is further arranged for ranking said one or more of said plurality of servers based on said physical distances between said UE and said one or more of said plurality of server.

In an embodiment, the DNS server is arranged to receive a DNS registration request, wherein the registration request comprises a domain name and one or more IP addresses that resolve to that domain name. Further, each of the IP addresses, i.e. servers that correspond to the IP addresses, are associated with server geolocation information, which server geolocation information is also comprised in the registration request. The DNS server is then able to store the domain name, the corresponding IP addresses as well as the corresponding server geolocation information in a database for future use.

IP addresses can change, or can follow the virtual server from one location to the other. IP addresses are not bound. So change of location needs to be updated to the DNS server. On the other side, because situations can happen when changes are not properly administrated / systems are not actual representing real situation, the UE may need to determine the real delay time.

In a fourth aspect, there is provided a UE arranged for querying a DNS Server, for resolving a domain name to one or more IP addresses.

The UE comprising:
- a transmitter arranged for transmitting to said DNS server, a DNS query, for resolving a domain name, wherein said query comprises said domain name to be resolved and comprises user geolocation information of said UE, wherein said user geolocation information provides for an indication of a geographical location of said UE;
- a receiver arranged for receiving from said DNS server, a DNS response comprising one or more of IP addresses corresponding to said domain name;
- select equipment arranged for selecting, by said UE, one of said one or more IP addresses in said DNS response.

In an embodiment hereof, the UE comprises:
- query equipment arranged for querying each of said plurality of servers corresponding to said one or more IP addresses in said DNS response for determining response time delays of each of said plurality of servers;
wherein said receive equipment is arranged for receiving query responses thereby establishing said response time delays of each of said plurality of servers, and herein said UE further comprises:
- process equipment arranged for determining which of said plurality of servers has lowest response time delay, and
wherein said select equipment is arranged for selecting said IP address of said server having said lowest response time delay.

In a further embodiment, the UE is arranged to execute an application, wherein said application comprises a plurality of sub-applications, wherein each sub-application is associated with its own Transmission Control Protocol/Internet Protocol, TCP/IP, protocol stack, wherein each of said TCP/IP protocol stacks are used for querying unique server of said plurality of servers in said DNS response for determining said response time delays.

The above-mentioned and other features and advantages of the disclosure will be best understood from the following description referring to the attached drawings. In the drawings, like reference numerals denote identical parts or parts performing an identical or comparable function or operation.

### Brief description of the drawings

Fig. 1 shows a basic concept of a DNS procedure.
Fig. 2 shows an example of a UE having a plurality of sub applications, which sub applications are arranged to simultaneously transmit queries.
Fig. 3 shows an embodiment of a method in accordance with the present disclosure.
Fig. 4 shows an embodiment of a user equipment in accordance with the present disclosure.
Fig. 5 shows an embodiment of a DNS server in accordance with the present disclosure.

### Detailed description of the drawings

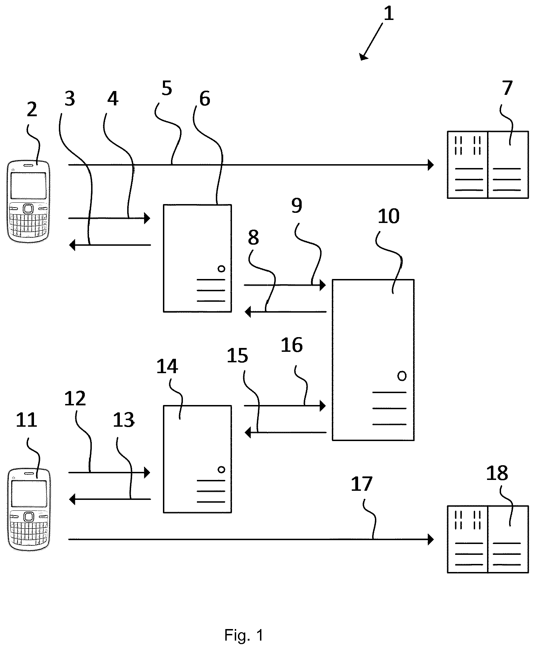

Fig. 1 shows a basic concept of a DNS procedure. Here, the procedure is explained with reference to two user equipment as indicated with reference numerals 2 and 11. The UE 2 resides, for example, in a country in Europe. The UE 11 resides, for example, in a the United States of America. The UE's 2, 11 are depicted as mobile phones. It is however noted that the UE's 2, 11 may be any type of digital communication device suitable for internet communication such as a laptop, tablet, personal computer, vehicle communication system, etc.

Both of the UE's 2, 11 sent out the same DNS query 4, 12 towards the DNS server 10. The same DNS query 4, 13 means that both UE's 2, 11 would like to resolve the same domain name, for example http://www.kpn.com/. In the present situation, the DNS queries 4, 12 traverse local DNS servers as indicated with reference numerals 6, 14. These local DNS servers 6, 14 may provide a same type of service as the DNS server 10. However, in the present situation, the local DNS servers 6, 14 forward the DNS queries 4, 12 towards the DNS server. This is indicated with reference numerals 9 and 16.

In accordance with the present disclosure, the DNS queries 4, 12 and thus also the queries as indicated with reference numerals 9 and 16, comprise user geolocation information of the UE 2, 11, respectively. User geolocation information provides for an indication of a geographical location of the corresponding UE 2, 11. That is, the information provided in the DNS queries 4, 9, 12, 16 enables the recipient to determine the physical location of the corresponding UE 2, 11.

For example, the UE may comprise a Global Positioning System, GPS, unit for determining its physical location and may provide GPS coordinates into a respective DNS query. Typically, the user geolocation information may be provided using latitude and longitude coordinates. In another example a cellID is provided in the DNS query, by the respective UE, to indicate the position/location of the respective UE.

The DNS server 10 will receive the DNS queries 9, 16 and will resolve the domain name provided therein. Hereto, the DNS server 10 may obtain a plurality of IP addresses 7, 18 corresponding to the received domain name, wherein each of the plurality of IP addresses is associated with server geolocation information of a corresponding server, wherein each of the server geolocation information provides for an indication of a geographical location of the corresponding server.

The server geolocation information may comprise GPS coordinates. Another option is that the server geolocation information is provided using latitude and longitude coordinates. In a further example, a network location reference is provided for indicating the location of a respective server in the network.

The DNS server 10 will then select one or more of the plurality of IP addresses 7, 18 based on comparisons of the user geolocation information with each of the server geolocation information. In the present scenario, the DNS server 10 will select a single IP address, being the IP address indicated with reference numeral 7, for the UE indicated with reference numeral 2. The DNS server 10 will further select a single IP address, being the IP address indicated with reference numeral 18, for the UE indicated with reference numeral 11.

As mentioned above, the selecting step is based on comparisons of the user geolocation information with each of the server geolocation information. For example, the DNS server 10 may decide that a server is selected in case the physical distance between a location of the UE and a location of the server is less then a predetermined distance threshold.

The basis assumption here is that it is likely that servers that are physically located closest to the physical location of the UE may provide for the fastest response times. That is, it is likely that the response time delays are lowest for those servers that are in the vicinity of the UE itself.

As such, the DNS server 10 will sent two DNS responses 8, 15. The DNS response indicated with reference numeral 8 comprises the IP address indicated with reference numeral 7. The DNS response indicated with reference numeral 15 comprises the IP address indicated with reference numeral 18. Both DNS responses 8, 15 are then, subsequently, transmitted back to the respective UE 2, 11, via appropriate DNS responses as indicated with reference numerals 3 and 13. Once the UE's 2, 11 have received the DNS responses, the UE's may set up connections 5, 17 to the respective IP address 7, 18, comprised therein. It is noted that the respective IP addresses 7, 18 can both be sent to the device as indicated with reference numeral 2.

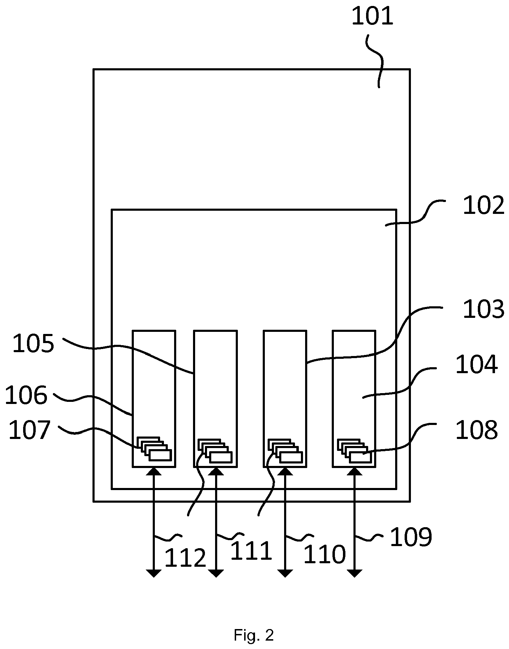

Fig. 2 shows an example of a UE 101 having a plurality of sub applications 103, 104, 105, 106, which sub applications 103, 104, 105, 106 are arranged to simultaneously transmit queries.

In the scenario depicted in figure 2, it is assumed that the UE 101 has transmitted a DNS query to a DNS server for resolving a particular domain name, for example http://www.kpn.com/.

The DNS response received from the DNS server comprises a plurality of IP addresses which IP addresses all resolve to that particular domain name. As such, the UE 101 could use each of these IP addresses. The DNS server had selected those IP addresses based on comparisons of the user geolocation information and each of the server geolocation information corresponding to the IP addresses in the DNS response.

Following the above, the UE 101 has to its disposal a plurality of IP addresses from which it can make a selection. Each of the servers corresponding to these IP addresses is able to serve the UE 101. That is, each of these servers provide for the same type of services for the UE 101 such that the UE 101 does not perceive any substantive difference between these servers.

However, the inventor has noted that it may be beneficial to select that server, i.e. to select the IP address, that has the lowest response time delay. This may be beneficial for a plurality of applications. The present disclosure is directed to a solution for the UE, and/or the DNS server, in which it is likely that the UE selects that server that has the lowest latency for that particular UE.

It is noted that the present disclosure is directed to reducing latency perceived by a user equipment. More specifically, the latency is perceived by an application running on the user equipment. Latency issues may, for example, play a role for mobile user equipment like smart phones, communication equipment in self-driving cars, real-time biometric applications and data sensors. Reducing the perceived latency, for an application, is especially useful in case the application operates in a real-time environment.

Following the above, the UE may query 109, 110, 111, 112 each of the servers corresponding to the plurality of IP addresses comprised in the DNS response for determining response time delays of each of the server. Here, a response time delay is defined as a time between querying a server and receiving a query response fro that server.

The response time delay, or the round-trip delay time or the round trip time, may be the length of time it takes for a signal to be sent, plus the processing time of the request, plus the length of time it takes for an acknowledgement of that signal to be received. Processing time is dependent of the configuration of the server, the resources the virtual machine (Memory, vCPU) has available, the amount of resources which is available to the process of the application processing the request and the business of the server, that is, all other tasks and other active applications and requests the server has to do at the time of the request. This time delay therefore consists of the propagation times between the UE and the respective server. One possible solution is the ping command. The other is the real request, or a standard request.

Once the UE 101 has received all the query responses from the respective servers, it may establish the response time delays of each of the servers. The UE 101 may, subsequently, determine which of the servers has the lowest response time delay as that servers should probably be used by the UE 101. That is, finally, the UE 101 may select the IP address of the server having the lowest response time delay.

In the present situation, the UE 101 may be arranged to execute an application 102, wherein said application comprises a plurality of sub-applications 103, 104, 105, 106, wherein each sub-application is associated with its own Transmission Control Protocol/Internet Protocol, TCP/IP, protocol stack 107, 108, 113, 114, wherein each of said TCP/IP protocol stacks 107, 108, 113, 114 are used for querying a unique server corresponding to said plurality of IP addresses in said DNS response for determining said response time delays.

The inventor has noted that it may be beneficial if the servers are queried at substantially the same time for determining the response time delays. This may be accomplished by using a different TCP/IP protocol stack for each query 107, 108, 113, 114. This effect may be increased if each of the sub-application is coupled to their own external interface.

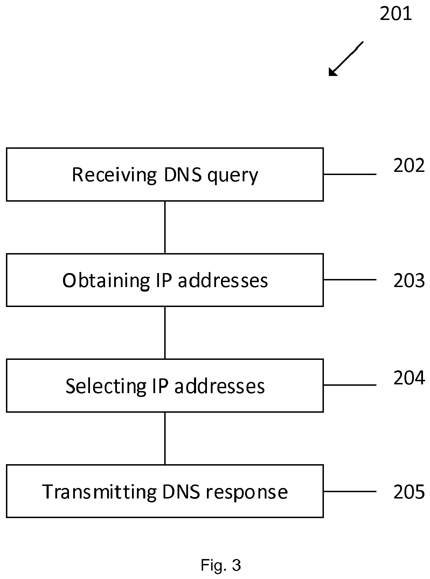

Fig. 3 shows an embodiment of a method in accordance with the present disclosure.

The method 201 is directed to the resolving a domain name by a DNS server, wherein said domain name resolves to a plurality of corresponding IP addresses,

The method 201 comprises the steps of:
- receiving 202, from a UE by said DNS server, a DNS query for resolving a domain name, wherein said query comprises said domain name to be resolved and comprises user geolocation information of said UE wherein said user geolocation information provides for an indication of a geographical location of said UE;
- resolving, by said DNS server, said received domain name to a plurality of IP addresses, wherein said resolving comprises the steps of:
   - obtaining 203, by said DNS server, said plurality of IP addresses corresponding to said received domain name, wherein each of said plurality of IP addresses is associated with server geolocation information of a corresponding server, wherein each of said server geolocation information provides for an indication of a geographical location of said corresponding server,
   - selecting 204 one or more of said plurality of IP addresses based on comparisons of said user geolocation information with each of said server geolocation information;
- transmitting 205, by said DNS server, a DNS response comprising said selected one or more of said plurality of IP addresses.

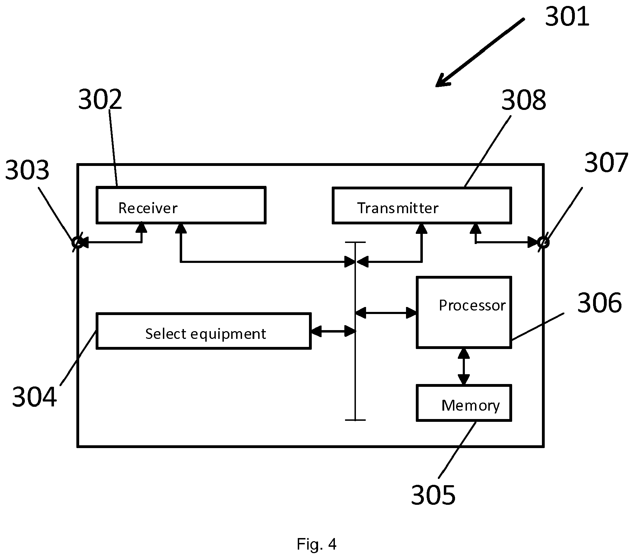

Fig. 4 shows an embodiment of a user equipment in accordance with the present disclosure.

The UE 301 is arranged for querying a DNS Server, for resolving a domain name to one or more IP addresses

The said UE comprises:
- a transmitter 308 arranged for transmitting to said DNS server, a DNS query, for resolving a domain name, wherein said query comprises said domain name to be resolved and comprises user geolocation information of said UE, wherein said user geolocation information provides for an indication of a geographical location of said UE;
- a receiver 302 arranged for receiving from said DNS server, a DNS response comprising one or more of IP addresses corresponding to said domain name;
- select equipment 304 arranged for selecting, by said UE, one of said one or more IP addresses in said DNS response.

Here, incoming data packets, or messages, pass through the input terminal 303 before they reach the receiver 302, or receiving module. Outgoing data packets or messages pass or are sent by the transmitter 308, or transmit module, via the output terminal 307. It is noted that the transmitter may be integrated in the same device as the receiver.

The UE 301 further comprises a processor 306 and a memory 305, which processor 306 is connected to the receiver 302, the transmitter 308 and the select equipment 304 via a bus connection or the like.

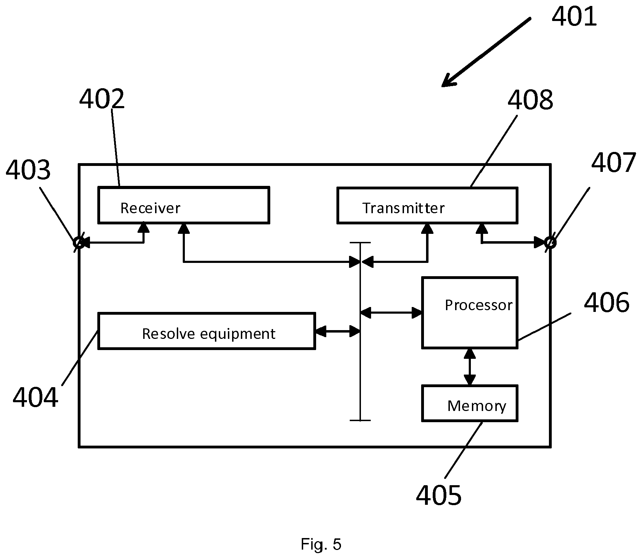

Fig. 5 shows an embodiment of a DNS server in accordance with the present disclosure.

The DNS server 401 is arranged for resolving a domain name to a plurality of IP addresses.

The DNS 401 server comprising:
- a receiver 402 arranged for receiving, from a UE a DNS query for resolving a domain name, wherein said query comprises said domain name to be resolved and comprises user geolocation information of said UE wherein said user geolocation information provides for an indication of a geographical location of said UE;
- resolve equipment 404 arranged for resolving said received domain name to a plurality of IP addresses, by:
   - obtaining said plurality of IP addresses corresponding to said received domain name, wherein each of said plurality of IP addresses is associated with server geolocation information of a corresponding server, wherein each of said server geolocation information provides for an indication of a geographical location of said corresponding server,
   - selecting one or more of said plurality of IP addresses based on comparisons of said user geolocation information with each of said server geolocation information;
- a transmitter 408 arranged for transmitting a DNS response comprising said selected one or more of said plurality of IP addresses

Here, incoming data packets, or messages, pass through the input terminal 403 before they reach the receiver 402, or receiving module. Outgoing data packets or messages pass or are sent by the transmitter 408, or transmit module, via the output terminal 407.

The DNS server 401 further comprises a processor 406 and a memory 405, which processor 406 is connected to the receiver 402, the transmitter 408 and the resolve equipment 404 via a bus connection or the like.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope thereof.

## Claims

1. A method (201) of resolving a domain name by a DNS server (10), wherein said domain name resolves to a plurality of corresponding IP addresses, said method comprises the steps of:
- receiving (202) a DNS query for resolving a domain name, wherein said query comprises said domain name to be resolved and comprises user geolocation information of said UE wherein said user geolocation information provides for an indication of a geographical location of said UE;
- resolving said received domain name to a plurality of IP addresses, wherein said resolving comprises the steps of:
- obtaining (203) said plurality of IP addresses corresponding to said received domain name, wherein each of said plurality of IP addresses is associated with server geolocation information of a corresponding server, wherein each of said server geolocation information provides for an indication of a geographical location of said corresponding server,
- selecting (204) one or more of said plurality of IP addresses based on comparisons of said user geolocation information with each of said server geolocation information;
- transmitting (205) to the UE a DNS response comprising said selected one or more of said plurality of IP addresses.

2. A method in accordance with claim 1, wherein said step of receiving said DNS query comprises:
- receiving successive DNS queries for resolving said same domain name, wherein each of said successive received DNS queries comprises updated user geolocation information.

3. A method in accordance with any of the previous claims, wherein said comparisons reflect physical distances between said UE and said one or more of said plurality of servers.

4. A method in accordance with claim 3, wherein said step of selecting comprises:
- ranking said one or more of said plurality of servers based on said physical distances between said UE and said one or more of said plurality of servers.

5. A method in accordance with any of the previous claims, wherein said user geolocation information and/or said server geolocation information comprise any of:
- Global Positioning System (GPS) coordinates of said UE and/or said servers;
- Cell identification of an access node in a telecommunication network serving said UE;
- Assisted GPS.

6. A method of querying by a user equipment (UE) a DNS Server, for resolving a domain name to one or more IP addresses, said method comprising the steps of:
- transmitting to said DNS server, a DNS query, for resolving a domain name, wherein said query comprises said domain name to be resolved and comprises user geolocation information of said UE, wherein said user geolocation information provides for an indication of a geographical location of said UE;
- receiving a DNS response comprising a plurality of IP addresses corresponding to said domain name;
- selecting one of said plurality of IP addresses in said DNS response.

7. A method in accordance with claim 6, wherein each of said plurality of IP addresses is associated with server geolocation information of a corresponding server, wherein each of said server geolocation information provides for an indication of a geographical location of said corresponding server, said DNS response comprising said server geolocation information, and wherein said step of selecting comprises:
- determining which of said one or more servers is physically closest to said UE based on comparisons of said user geolocation information with each of said server geolocation information;
- selecting said IP address of said server which is physically closest to said UE.

8. A method in accordance with any of the claims 6 - 7, wherein said DNS response comprises a plurality of IP addresses corresponding to said domain name, wherein the step of selecting one of said plurality of IP addresses in said DNS response comprises:
- querying each of said servers corresponding to said plurality of IP addresses in said DNS response for determining response time delays of each of said servers, wherein a response time delay is defined as a time between querying a server and receiving a query response from that server;
- receiving query responses thereby establishing said response time delays of each of said servers;
- determining which of said plurality of servers has lowest response time delay;
- selecting said IP address of said server having said lowest response time delay.

9. A method in accordance with claim 8, wherein said method comprises the steps of:
- executing, by said UE, an application, wherein said application comprises a plurality of sub-applications, wherein each sub-application is associated with its own Transmission Control Protocol/Internet Protocol, TCP/IP, protocol stack,
- querying, using each of said TCP/IP protocol stacks, a unique server corresponding to said plurality of IP addresses in said DNS response for determining said response time delays.

10. A method in accordance with claim 9, wherein said step of querying comprises:
- querying, using each of said TCP/IP protocol stacks, a unique server corresponding to said plurality of IP addresses in said DNS response for determining said response time delays at substantially the same time.

11. A Domain Name System (DNS) server arranged for resolving a domain name to a plurality of IP addresses, said DNS server comprising:
- a receiver arranged for receiving, from a User Equipment (UE) a DNS query for resolving a domain name, wherein said query comprises said domain name to be resolved and comprises user geolocation information of said UE wherein said user geolocation information provides for an indication of a geographical location of said UE;
- resolve equipment arranged for resolving said received domain name to a plurality of IP addresses, by:
- obtaining said plurality of IP addresses corresponding to said received domain name, wherein each of said plurality of IP addresses is associated with server geolocation information of a corresponding server, wherein each of said server geolocation information provides for an indication of a geographical location of said corresponding server,
- selecting one or more of said plurality of IP addresses based on comparisons of said user geolocation information with each of said server geolocation information;
- a transmitter arranged for transmitting a DNS response comprising said selected one or more of said plurality of IP addresses.

12. A DNS server in accordance with claim 11, wherein said comparisons reflect physical distances between said UE and said one or more of said plurality of servers, wherein said resolve equipment is further arranged for ranking said one or more of said plurality of servers based on said physical distances between said UE and said one or more of said plurality of server.

13. A UE arranged for querying a DNS Server, for resolving a domain name to one or more IP addresses, said UE comprising:
- a transmitter arranged for transmitting to said DNS server, a DNS query, for resolving a domain name, wherein said query comprises said domain name to be resolved and comprises user geolocation information of said UE, wherein said user geolocation information provides for an indication of a geographical location of said UE;
- a receiver arranged for receiving from said DNS server, a DNS response comprising one or more of IP addresses corresponding to said domain name;
- select equipment arranged for selecting, by said UE, one of said one or more IP addresses in said DNS response.

14. A UE in accordance with claim 13, wherein said UE comprises
- query equipment arranged for querying each of said plurality of servers corresponding to said one or more IP addresses in said DNS response for determining response time delays of each of said plurality of servers;
wherein said receive equipment is arranged for receiving query responses thereby establishing said response time delays of each of said plurality of servers, and herein said UE further comprises:
- process equipment arranged for determining which of said plurality of servers has lowest response time delay, and
wherein said select equipment is arranged for selecting said IP address of said server having said lowest response time delay.

15. A UE in accordance with claim 14, wherein said UE is arranged to execute an application, wherein said application comprises a plurality of sub-applications, wherein each sub-application is associated with its own Transmission Control Protocol/Internet Protocol, TCP/IP, protocol stack, wherein each of said TCP/IP protocol stacks are used for querying unique server of said plurality of servers in said DNS response for determining said response time delays.
